# EUROPEAN PATENT SPECIFICATION

(11) **EP 3 366 472 B1**
(45) Date of publication and mention of the grant of the patent: **29.04.2020**
(21) Application number: 18157155.5
(22) Date of filing: 16.02.2018
(51) Int. Cl.: B32B 41/00, B32B 38/18, B60R 13/10

(54) **LAMINATING MACHINE FOR LAMINATING THREE-LAYER ACRYLIC LICENSE PLATES**
KASCHIERMASCHINE ZUM KASCHIEREN VON DREISCHICHTIGEN ACRYLAT-KENNZEICHENSCHILDERN
MACHINE DE STRATIFICATION POUR STRATIFIER DES PLAQUES D'IMMATRICULATION ACRYLIQUES À TROIS COUCHES

(30) Priority: 22.02.2017 ES 201730227
(43) Date of publication of application: 29.08.2018
(73) Proprietor: INDUSTRIAS SAMAR'T, S.A., 17600 Figueres (Gerona) (ES)
(72) Inventor: SÁNCHEZ CASADEVALL, Enrique, 17600 Figueres (GIRONA) (ES)
(74) Representative: Munoz Garcia, Antonio

(56) References cited:
- EP-A1- 1 803 611
- EP-A1- 2 193 925
- FR-A1- 3 011 767

## Description

### OBJECT OF THE INVENTION

As expressed by the title of the present specification, the invention relates to a laminating machine for laminating three-layer acrylic license plates which provides the intended function thereof with advantages and features that will be described in detail below and entail a significant improvement over the current state of the art.

More specifically, the object of the invention resides in a hand-operated or motor-driven machine for laminating license plates of the type formed by three layers consisting of a transparent acrylic part on the back of which there is adhered a reflective film bearing the characters and signs of the plate, which constitutes the second layer, and furthermore, a third layer formed by either another acrylic part or else a reinforcing plate, having the particularity of being provided with specific holding and guiding means which seek to immobilize the three layers with respect to one another so that they are perfectly aligned, and the reflective film, which has a smaller perimeter surface, so that it is centered therein when the assembly is being inserted between the laminating rollers and throughout the entire laminating process.

### FIELD OF APPLICATION OF THE INVENTION

The field of application of the present invention is encompassed within the sector of the industry dedicated to the manufacture of machines, apparatus and devices for producing license plates, focusing particularly on the field of laminators.

### BACKGROUND OF THE INVENTION

As is known, in the field of license plate production, a laminator is a machine which, provided with rollers, allows attaching the different layers of material forming the plates together by exerting pressure on said layers when they are passed through same.

In the case of acrylic plates, which are the most sought-after today and are formed by a transparent part of said material with at least a reflective film bearing the signs and characters of the plate adhered on the back thereof, and another rear reinforcing part on the back of it, the problem that arises stems from the need to have a border on at least the upper edge and lower edge of the plate, between said parts and said reflective film, to prevent moisture and/or dust or other foreign bodies from being introduced between both elements, which leads to an undesired deterioration of the plate which drastically reduces its aesthetic appearance and service life.

Specifically, if the part made of acrylic material and the reflective film are cut so as to have the same measurement, and therefore the edges of the two elements coincide with one another, said introduction of moisture, dust or foreign bodies carried by the environment between the elements becomes easier, where they would simply accumulate on said edge, normally in the upper portion of the plate that is usually more exposed, either due to any blow or friction that it may receive, causing a minimum separation of the mentioned elements, or to any blow or friction that may simply define a small cavity in which moisture or dust or foreign bodies accumulate, which cavity may become larger in no time until causing a disastrous effect on the plate.

For this reason, the reflective film is made such that it has a height somewhat smaller than the acrylic part and the reinforcing part, and such that, during the attachment thereof, while centering the film on the surface of the rear face of the acrylic part, there is an upper safety edge and lower safety edge which prevents the described drawback of an eventual early deterioration.

However, laminating the acrylic part and the reinforcing part with different dimensions such that they are centered with respect to one another is a complicated operation to perform with existing laminators since, particularly when inserting the end of both elements between the rollers that press on them to attach them together by lamination, the actual pressure of the rollers pushes the elements, making it almost impossible for the elements to not move unduly with respect to one another and become off-centered.

The objective of the present invention is therefore to develop a new laminator for this type of three-layer acrylic plate solving the problems that have been described in a simple and practical manner, and in reference to the current prior art, it must be pointed out that although different types and models of laminators for license plates are known on the market, the applicant is nonetheless unaware of the existence of any laminator having technical, structural and constitutive features which are identical or similar to the features of the invention herein proposed and claimed.

In that sense, it must be indicated that as the most closely related document, patent FR3011767A1 relating to a machine for manufacturing an information panel or license plate is known, which machine comprises: a laying plane intended for receiving the elements to be laminated and a squaring system for positioning said elements in coincidence, in addition to a rolling mill with at least two rollers. Said squaring system comprises a horizontal stop to keep the elements on the inclined laying plane, and to ensure their guidance in translation to the roller, and a lateral stop positioned perpendicular to the horizontal stop, there also being a movable pushing system for guiding the translation in the laying plane and parallel to the horizontal stop of the elements to be laminated. Said stops and pushing system, however, are substantially different from the stepped guides and movable stop of the machine of the present invention, because they do not have steps or other means for aligning or centering the elements to be laminated since the machine of this document and its guiding system is only conceived for manufacturing plates made up of just two elements to be laminated having substantially identical dimensions. Therefore, its guides and stops only serve as a support and cannot solve the problems considered in the present invention.

### DESCRIPTION OF THE INVENTION

The laminating machine for laminating three-layer acrylic license plates proposed by the invention is thus configured as a remarkable novelty within its field of application, since the objectives indicated above are specifically and satisfactorily achieved resulting from its implementation, the characterizing details thereof which make it possible and which distinguish it being conveniently included in the final claims accompanying the present description.

Specifically, as described above the invention proposes a machine, preferably a motor-driven machine, for laminating acrylic license plates comprising three layers, i.e., plates formed by a transparent acrylic part on the back of which there is adhered at least a reflective film with the characters and signs of the plate, and after that an acrylic or metal reinforcing part, the machine having the innovative particularity of being provided with specific holding and guiding means which seek to immobilize the reflective film, which has a smaller dimension than the acrylic part and the reinforcing part, so that it is perfectly centered between the acrylic part and the reinforcing part when the assembly is being inserted between the laminating rollers and throughout the entire laminating process.

More specifically, said holding and guiding means are made up of respective guides incorporated in the body of the machine, said guides being parallel to one of the sides of the upper base thereof, facing one another, placed at the necessary distance, in accordance with the height of the plate to be laminated, and perpendicular to the rollers, each of said guides contemplating three longitudinal steps which allow housing each of the different layers forming the plate in a correctly positioned manner so that the reflective film is perfectly centered in height between the upper side and lower side of the acrylic part and of the reinforcing part, and so that the acrylic part and the reinforcing part are perfectly aligned with one another on said sides and so that the three layers are aligned on both lateral sides, such that they can be placed against one another and guided without any unwanted movements occurring both in the step of inserting the three layers to be laminated between the rollers and along the entire path traveled between said rollers,

For said alignment of the three layers on their lateral sides, the machine preferably contemplates the incorporation of a movable stop located at the distal end of the guides, i.e., the end opposite the position of the rollers, on which the layers are supported to achieve said alignment.

The described laminating machine for laminating acrylic license plates therefore represents an innovation of structural and constitutive features that were unknown up until now, and these reasons, combined with its practical usefulness, give the invention sufficient grounds for obtaining the exclusive right that is sought.

### DESCRIPTION OF THE DRAWINGS

To complement the description that is being made and for the purpose of aiding to better understand the features of the invention, a set of drawings is attached to the present specification as an integral part thereof in which the following has been depicted with an illustrative and non-limiting character:

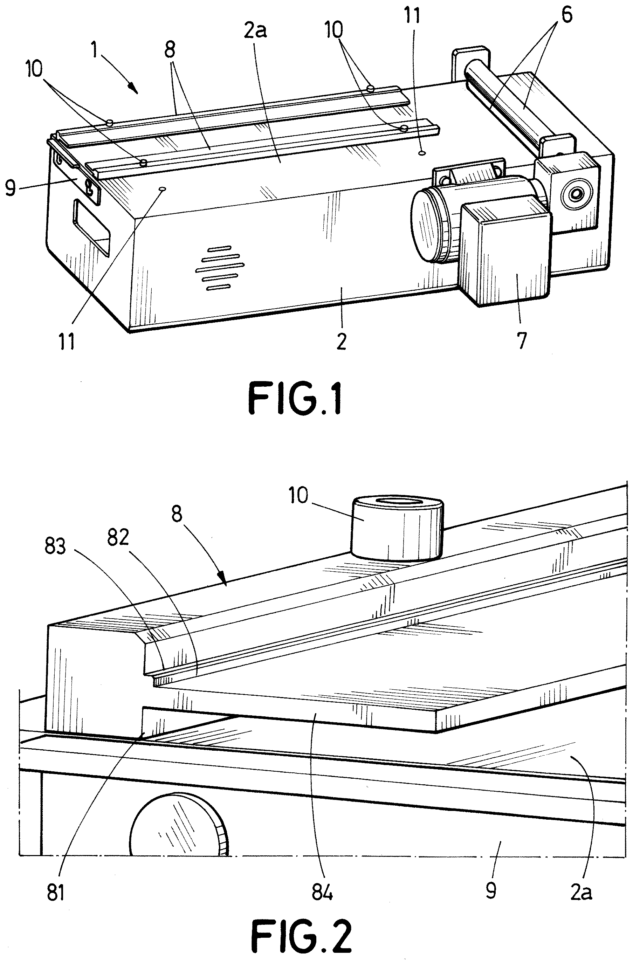

Figure 1 shows a perspective view of an example of the laminating machine for laminating three-layer acrylic license plates object of the invention, in which the main parts and elements the invention comprises, as well as the configuration and arrangement thereof, can be seen.
Figure 2 shows an enlarged view of the distal end of one of the guides of the machine of the invention, where the configuration of said machine, particularly the arrangement and configuration of the steps it has for incorporating and guiding the three layers of the plate, can be seen.

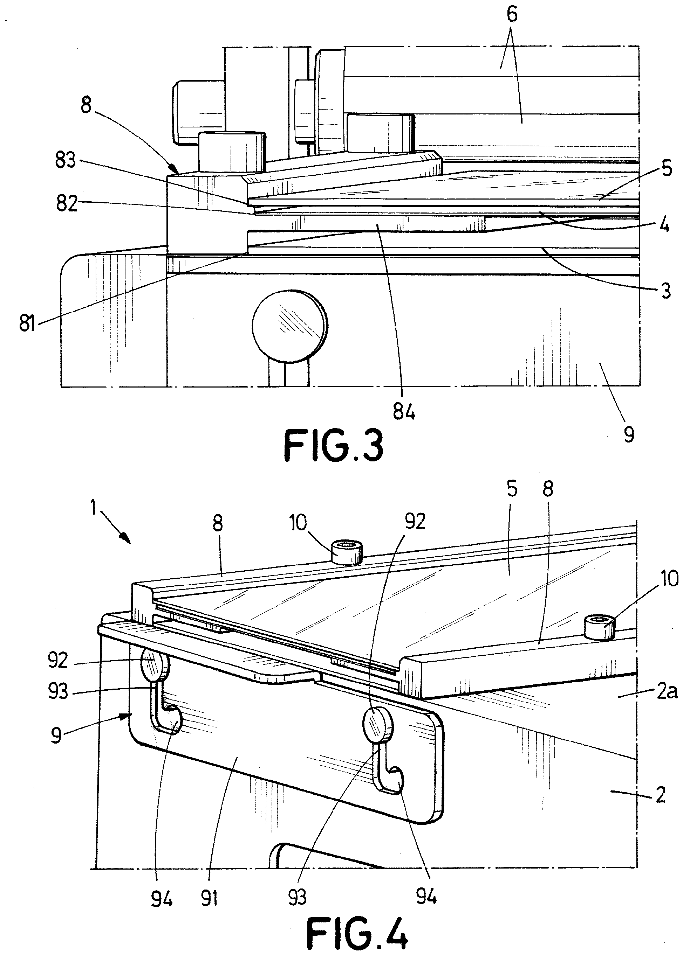

Figure 3 shows a view similar to the view shown in Figure 2 of the distal end of one of the guides of the machine of the invention, said machine being depicted in this case with the three layers forming the plate incorporated therein.
Figure 4 shows a view of the distal end of both guides and side of the body of the machine, where the movable stop for aligning the layers is incorporated on the lateral sides, with the layers incorporated therein and with said stop in the non-operative position also having been depicted.

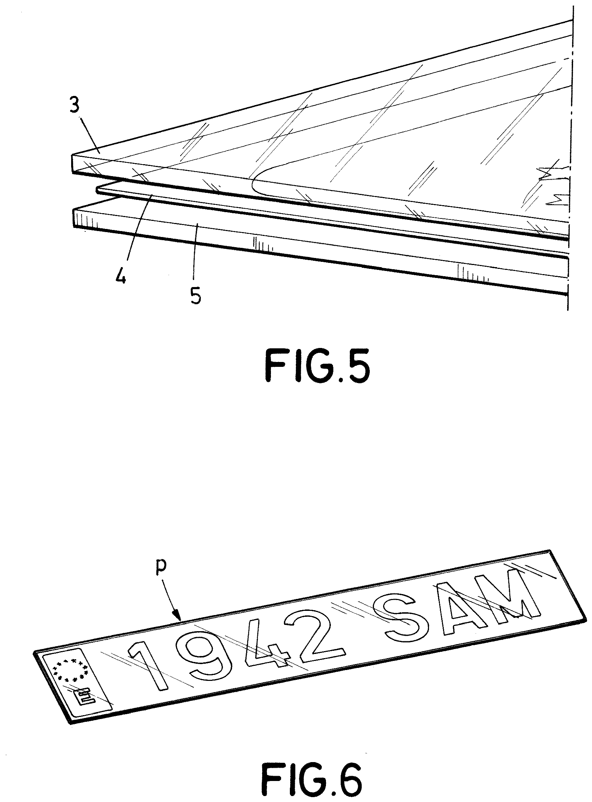

Figure 5 shows an enlarged detail of the three layers forming the plate to be formed with the laminating machine object of the invention, the configuration and arrangement thereof being seen.
Figure 6 shows a perspective view of an example of a plate once it has been manufactured.

### PREFERRED EMBODIMENT OF THE INVENTION

In view of the mentioned drawings and according to the numbering used therein, a proposed non-limiting example of the laminating machine for laminating three-layer acrylic license plates, which comprises the parts and elements indicated and described in detail below, can be seen.

In this sense, as seen in said drawings the laminator (1) in question is formed, as is known, from a prismatic body (2) with an upper base (2a), determining a rectangular surface suitable for incorporating the layers to be laminated that must form the plate (p), consisting of at least an acrylic part (3), a reflective film (4) and a reinforcing part (5), which can also be acrylic or metallic, and with rollers (6) located at one of the ends of said upper base (2a), where said layers (3, 4, 5) arranged one on top of another are passed between said rollers for attaching them together, and where said rollers rotate in opposite directions upon actuating same, for example by means of a motor (7) coupled to the shaft of one of said rollers which the body (2) of the machine (1) also has.

Based on this configuration, the machine (1) is distinguished by having holding and guiding means formed by stepped guides (8) and a movable stop (9) which align and immobilize the three layers to be laminated with the reflective film (4) being centered with respect to the acrylic part (3) and the reinforcing part (5), which acrylic part (3) and reinforcing part (5) have a larger perimeter surface than the reflective film (4), and which keep them in place, guiding them without them moving with respect to one another during the laminating process, both while inserting them together between the rollers (6), and along almost the entire path they travel through the rollers (6).

Specifically, said guides (8) are two in number and are incorporated in the upper base (2a) of the body (2), located parallel to and facing one another at a variable distance, which is the necessary distance depending on the width of the layers to be laminated, and perpendicular to the rollers (6), and each of said guides (8) has three longitudinal steps (81, 82, 83) for housing each of the different layers in the position corresponding to it in order for the reflective film (4) to be centered in height between the upper side and lower side of the acrylic part (3) and of the reinforcing part (5), as well as for the acrylic part (3) and the reinforcing part (5) to be perfectly aligned with one another.

It must be understood that when referring to the width of the layers (3, 4, 5) forming the license plate, reference is being made to the dimension of the shorter side of the rectangular shape that license plates normally have, and in any case, to that coinciding with the dimension between the upper side and lower side of the plate.

Specifically, each guide (8) has a lower step (81) for housing the acrylic part (3), which is arranged with the adhesive-coated surface face up, a central step (82) for housing the reflective film (4), which is arranged with the characters facing downwards, and an upper step (83) for housing the reinforcing part (5), which can be made of methacrylate or aluminum and is arranged with the adhesive-coated surface also facing downwards, with the lower step (81) and the upper step (83) of each guide (8) both being separated the same distance from one another and being separated a greater distance from one another than the distance separating both central steps (82) of each guide (8), with said difference in distance being half the difference in height existing between the acrylic part (3) and the reinforcing part (5), which is identical, and the reflective film (4), which is smaller.

Furthermore, between the lower step (81) and the central step (82) there has been provided a supporting shelf (84) where the reflective film is placed, preventing direct contact of the reflective film with the acrylic part (3), as it is supported on the shelves (84) of both guides (8), until being arranged between the rollers (6), since the reflective film (4) is arranged with the adhesive face thereof, i.e., the face incorporating the characters and signs of the plate, arranged facing downwards, opposite the surface of the acrylic part (3). To that end, said shelf (84) in each guide (8) spans the entire length thereof and has a sufficient width to keep said reflective film (4) without warping in the empty space between them.

In any case, it is important to point out that preferably at least one of the described guides (8), preferably both, is removable and can be placed in different positions so as to vary the space separating one guide from the other one and to enable adjusting to different plate sizes, for which purpose it is fastened by means of screws (10) inserted in holes (11) provided for that purpose in several strategic locations of the upper base (2a) of the body (2) of the machine.

In turn, the movable stop (9) is located at the distal end of the guides (8), i.e., the end opposite the position of the rollers (6), in order to support thereon the three layers (3, 4, 5) forming the plate once they have been located between the guides (8) and to assure alignment thereof along their lateral sides.

In the preferred embodiment, said movable stop (9) is made up of a small plate (91) located on the lateral edge of the body (2) of the machine, facing the distal end of the guides (8), held by means of respective pins (92) inserted in respective grooves (93) with a vertical segment and a lateral housing (94) which allow the sliding in the vertical direction and fixing of said small plate above the upper base (2a) of the body (2) and level with said guides (8) to enable supporting thereon and aligning the layers (3, 4, 5) placed in same and those which are going to be laminated.

Having sufficiently described the nature of the present invention as well as the way of putting it into practice, it is not considered necessary to further describe the invention so that a person skilled in the art can comprehend the scope thereof and the advantages derived from it, stating that within its essential nature, the present invention could be carried out to practice in other embodiments differing in detail from that indicated by way of example, and such embodiments would also be granted the protection that is sought provided that the fundamental principle thereof is not altered, changed or modified.

## Claims

1. A laminating machine for laminating three-layer acrylic license plates, said plates (p) consisting of at least an acrylic part (3), a reflective film (4) and a reinforcing part (5), where the reflective film (4) has a smaller perimeter surface than the acrylic part (3) and the reinforcing part (5) which are identical to one another, and which, comprising a prismatic body (2) with an upper base (2a), determining a rectangular surface suitable for incorporating the layers to be laminated, which base, at one of its ends, has rollers (6) rotating in opposite directions which are operated by hand or by means of motor (7), the machine having holding and guiding means, which are determined at least by stepped guides (8) and a movable stop (9), which align and immobilize the three layers (3, 4, 5) to be laminated, with the reflective film (4) being centered with respect to the acrylic part (3) and the reinforcing part (5), which have a greater height than said reflective film (4), and keep them in place guiding them without them moving with respect to one another during the laminating process, both while inserting them together between the rollers (6), and along almost the entire path they travel through the rollers (6); wherein the stepped guides (8) are two guides (8) which are incorporated in the upper base (2a) of the body (2), being located parallel to and facing one another at a certain distance according to the width of the layers to be laminated, and perpendicular to the rollers (6), each of said guides (8) having three longitudinal steps (81, 82, 83) for housing each of the different layers in the position corresponding to it in order for the reflective film (4) to be centered in height between the upper side and lower side of the acrylic part (3) and of the reinforcing part (5), as well as for the acrylic part (3) and the reinforcing part (5) to be perfectly aligned with one another.

2. The laminating machine for laminating three-layer acrylic license plates according to claim 1, **characterized in that** each guide (8) has a lower step (81) for housing the acrylic part (3), a central step (82) for housing the reflective film (4), and an upper step (83) for housing the reinforcing part (5), with the lower step (81) and the upper step (83) of each guide (8) both being separated the same distance from one another and being separated a greater distance from one another than the distance separating both central steps (82) of each guide (8), with said difference in distance being half the difference in height existing
between the acrylic part (3) and the reinforcing part (5), which are identical to one another, and the reflective film (4), which is smaller.

3. The laminating machine for laminating three-layer acrylic license plates according to claim 2, **characterized in that** between the lower step (81) and the central step (82) there has been provided a supporting shelf (84) where the reflective film is placed.

4. The laminating machine for laminating three-layer acrylic license plates according to claim 3, **characterized in that** the shelf (84), in each guide (8), spans the entire length thereof.

5. The laminating machine for laminating three-layer acrylic license plates according to any of claims 1 to 4, **characterized in that** at least one of the guides (8) is removable and can be put in different positions so as to vary the space separating one guide from the other one and to adjust to different plate sizes.

6. The laminating machine for laminating three-layer acrylic license plates according to claim 5, **characterized in that** at least one of the guides (8) is fastened by means of screws (10) inserted in holes (11) provided in several locations of the upper base (2a) of the body (2) of the machine.

7. The laminating machine for laminating three-layer acrylic license plates according to any of claims 1 to 6, **characterized in that** the movable stop (9) is located at the distal end of the guides (8), i.e., the end opposite the position of the rollers (6), in order to support thereon the three layers (3, 4, 5) forming the plate once they have been located between the guides (8) and to assure alignment thereof along their lateral sides.

8. The laminating machine for laminating three-layer acrylic license plates according to claim 7, **characterized in that** the movable stop (9) is made up of a small plate (91) located on the lateral edge of the body (2) of the machine, facing the distal end of the guides (8), held by means of pins (92) inserted in grooves (93) with a vertical segment and a lateral housing (94) which allow the sliding in the vertical direction and the fixing of said small plate above the upper base (2a) of the body (2) and level with said guides (8) to enable supporting thereon and aligning the layers (3, 4, 5) placed in same and those which are going to be laminated.

## Patentansprüche

1. Kaschiermaschine zum Kaschieren von dreischichtigen Acrylat-Kennzeichenschildern, wobei die Schilder (p) mindestens aus einem Acrylat-Teil (3), einem reflektierenden Film (4) und einem Verstärkungsteil (5) bestehen, wobei der reflektierende Film (4) eine kleinere Umfangsfläche als das Acrylat-Teil (3) und das Verstärkungsteil (5), welche identisch sind, aufweist, und welche einen prismatischen Körper (2) mit einer oberen Grundfläche (2a) umfasst, welche eine rechteckige Oberfläche bestimmt, welche dazu geeignet ist, die zu kaschierenden Schichten aufzunehmen, welche Grundfläche in einem ihrer Enden über Rollen (6) verfügt, welche sich manuell oder mittels eines Motors (7) betätigt in entgegengesetzte Richtungen drehen, wobei die Maschine über Befestigungs- und Führungsmittel verfügt, welche mindestens von gestuften Führungen (8) und einem beweglichen Anschlag (9) bestimmt sind, welche die drei zu kaschierenden Schichten (3, 4, 5) ausrichten und festklemmen, mit dem reflektierenden Film (4) mittig in Bezug auf das Acrylat-Teil (3) und das Verstärkungsteil (5), welche eine größere Höhe als derjenige aufweisen, und welche sie in ihrer Stelle gehalten werden, wobei diese geführt werden, ohne dass sie sich dazwischen während des Kaschierprozesses verschieben, sowohl zum Zeitpunkt der gemeinsamen Einführung derselben zwischen den Rollen (6) als auch entlang fast des gesamten Weges, welcher davon durch die Rollen (6) vollzogen wird; wobei die gestuften Führungen (8) Führungen (8) sind, welche in der oberen Grundfläche (2a) des Körpers (2) aufgenommen sind, parallel und zueinander gegenübergestellt mit einem Abstand gemäß der Breite der zu kaschierenden Schichten platziert, und senkrecht zu den Rollen (6), wobei jede der genannten Führungen (8) über drei längliche Stufen (81, 82, 83) verfügt, um jede der unterschiedlichen Schichten in ihrer entsprechenden Stellung aufzunehmen, damit der reflektierende Film (4) höhenmäßig zwischen der oberen und der unteren Seite des Acrylat-Teils (3) und des Verstärkungsteils (5) mittig bleibt, sowie damit diese zueinander perfekt ausgerichtet bleiben.

2. Kaschiermaschine zum Kaschieren von dreischichtigen Acrylat-Kennzeichenschildern nach Anspruch 1, **dadurch gekennzeichnet, dass** jede Führung (8) eine untere Stufe (81), um das Acrylat-Teil (3) aufzunehmen, eine mittige Stufe (82), um den reflektierenden Film (4) aufzunehmen, und eine obere Stufe (83), um das Verstärkungsteil (5) aufzunehmen, aufweist, wobei jeweils die untere Stufe (81) und die obere Stufe (83) jeder Führung (8) voneinander mit dem gleichen Abstand und einem größeren Abstand als der Abstand, welcher beide mittige Stufen (82) jeder Führung (8) trennt, getrennt sind, wobei der genannte Abstandsunterschied die Hälfte des Höhenunterschieds ist, welcher zwischen dem Acrylat-Teil (3) und dem Verstärkungsteil (5), welche identisch sind, vorliegt, mit der reflektierenden Folie (4), welche kleiner ist.

3. Kaschiermaschine zum Kaschieren von dreischichtigen Acrylat-Kennzeichenschildern nach Anspruch 2, **dadurch gekennzeichnet, dass** zwischen der unteren Stufe (81) und der mittigen Stufe (82) ein Aufsetzsims (84) vorgesehen ist, in welchem sich der reflektierende Film befindet.

4. Kaschiermaschine zum Kaschieren von dreischichtigen Acrylat-Kennzeichenschildern nach Anspruch 3, **dadurch gekennzeichnet, dass** der Sims (84), in jeder Führung (8), deren Gesamtlänge umspannt.

5. Kaschiermaschine zum Kaschieren von dreischichtigen Acrylat-Kennzeichenschildern nach einem der Ansprüche 1 bis 4, **dadurch gekennzeichnet, dass** mindestens eine der Führungen (8) ausziehbar ist und in unterschiedlichen Stellungen platziert werden kann, um den Raum, welcher sie voneinander trennt, zu ändern und sich an unterschiedliche Schildergrößen anzupassen.

6. Kaschiermaschine zum Kaschieren von dreischichtigen Acrylat-Kennzeichenschildern nach Anspruch 5, **dadurch gekennzeichnet, dass** mindestens eine der Führungen (8) mittels Schrauben (10) fixiert wird, welche in Löcher (11) eingeführt werden, welche in mehreren Stellen der oberen Grundfläche (2a) des Körpers (2) der Maschine vorgesehen sind.

7. Kaschiermaschine zum Kaschieren von dreischichtigen Acrylat-Kennzeichenschildern nach einem der Ansprüche 1 bis 6, **dadurch gekennzeichnet, dass** sich der bewegliche Anschlag (9) im distalen Ende der Führungen (8) befindet, das heißt, das der Stellung der Rollen (6) entgegengesetzte Ende, um darauf die drei Schichten (3, 4, 5), welche das Schild bilden, sobald sie sich zwischen den Führungen (8) befinden aufzusetzen und deren Ausrichtung an deren seitlichen Seiten zu gewährleisten.

8. Kaschiermaschine zum Kaschieren von dreischichtigen Acrylat-Kennzeichenschildern nach Anspruch 7, **dadurch gekennzeichnet, dass** der bewegliche Anschlag (9) aus einer Platine (91) gebildet ist, welche sich im seitlichen Rand des Körpers (2) der Maschine befindet, gegenüber von dem distalen Ende der Führungen (8), mittels Stifte (92) befestigt, welche in Nuten (93) mit einer vertikalen Strecke und einer seitlichen Aufnahme (94) eingeführt sind, welche die Verschiebung in vertikaler Richtung und die Fixierung der genannten Platine über der oberen Grundfläche (2a) des Körpers (2) und mit den genannten Führungen (8) fluchtend erlauben, um die Schichten (3, 4 und 5), welche sich dort befinden und zu kaschieren sind, darauf aufsetzen und ausrichten zu können.

## Revendications

1. Machine de stratification de plaques d'immatriculation acryliques à trois couches, les plaques (p) consistant, au moins, en une pièce acrylique (3), une pellicule réfléchissante (4) et une pièce de renfort (5), où la pellicule réfléchissante (4) a une surface périmétrale inférieure à la pièce acrylique (3) et la pièce de renfort (5) qui sont identiques, et qui, comprenant un corps (2) prismatique avec une base supérieure (2a), qui détermine une surface rectangulaire apte à incorporer les couches à stratifier, ladite base, dans une de ses extrémités comporte des rouleaux (6) qui tournent dans des sens opposés actionnés manuellement ou au moyen d'un moteur (7), la machine comporte des moyen de retenue et de guidage, déterminés, au moins, par des guides (8) échelonnés, et une butée mobile (9), qui alignent et immobilisent les trois couches (3, 4, 5) à stratifier, avec la pellicule réfléchissante (4) centrée par rapport à la pièce acrylique (3) et à la pièce de renfort (5), qui ont une hauteur supérieure à celle-ci, et les maintiennent à leur place en les guidant sans qu'elles se déplacent entre elles si pendant le procédé de stratification, aussi bien au moment de l'insertion de celles-ci conjointement avec les rouleaux (6), que le long de presque tout le parcours effectué par celles-ci à travers les rouleaux (6); en ce que les guides (8) échelonnés sont deux guides (8) qui sont incorporés à la base supérieure (2a) du corps (2), situés en parallèle et opposés entre eux à une distance selon la largeur des couches à stratifier, et perpendiculaires aux rouleaux (6), chacune desdits guides (8) comportant trois échelons (81, 82, 83) longitudinaux pour loger chacune des différentes couches dans la position correspondante pour que la pellicule réfléchissante (4) demeure centrée en hauteur entre le côté supérieur et inférieur de la pièce acrylique (3) et de la pièce de renfort (5), ainsi que pour que celles-ci demeurent parfaitement alignées entre elles.

2. Machine de stratification de plaques d'immatriculation acryliques à trois couches, selon la revendication 1, **caractérisée en ce que** chaque guide (8) présente un échelon inférieur (81) pour loger la pièce acrylique (3), un échelon central (82), pour loger la pellicule réfléchissante (4), et un échelon supérieur (83) pour loger la pièce de renfort (5), l'échelon inférieur (81) et le supérieur (83) de chaque guide (8) étant séparés les deux à la même distance entre eux et à une distance supérieure à la distance qui sépare les deux échelons centraux (82) de chaque guide (8), ladite différence de distance étant la moitié de la différence de hauteur existant entre la pièce acrylique (3) et celle de renfort (5), qui sont identiques, avec la feuille réfléchissante (4) qui est inférieure.

3. Machine de stratification de plaques d'immatriculation acryliques à trois couches, selon la revendication 2, **caractérisée en ce que**, entre l'échelon inférieur (81) et l'échelon central (82), il est prévu une tablette (84) d'appui où est située la pellicule réfléchissante.

4. Machine de stratification de plaques d'immatriculation acryliques à trois couches, selon la revendication 3, **caractérisée en ce que** la tablette (84), sur chaque guide (8), couvre toute la longueur.

5. Machine de stratification de plaques d'immatriculation acryliques à trois couches, selon l'une quelconque des revendications 1 à 4, **caractérisée en ce que**, au moins, un des guides (8) est amovible et peut être mis en place dans différentes positions, pour varier l'espace qui la sépare de l'autre et s'ajuster à différentes dimensions de plaques.

6. Machine de stratification de plaques d'immatriculation acryliques à trois couches, selon la revendication 5, **caractérisée en ce que**, au moins, un des guides (8) est fixé au moyen de vis (10) insérés dans des orifices (11) prévus dans divers emplacements de la base supérieure (2a) du corps (2) de la machine.

7. Machine de stratification de plaques d'immatriculation acryliques à trois couches, selon l'une quelconque des revendications 1 à 6, **caractérisée en ce que** la butée mobile (9) est située à l'extrémité distale des guides (8), c'est-à-dire, l'extrémité opposée à la position des rouleaux (6), pour appuyer les trois couches (3, 4, 5) qui forment la plaque sur celui-ci, une fois situées entre les guides (8) et assurer leur alignement par le biais de ces côtés latéraux.

8. Machine de stratification de plaques d'immatriculation acryliques à trois couches, selon la revendication 7, **caractérisée en ce que** la butée mobile (9) est constituée d'une platine (91) située sur le bord latéral du corps (2) de la machine, face à l'extrémité distale des guides (8), retenue par le biais d'ergots (92) insérés dans des rainures (93) avec un tronçon vertical et un logement latéral (94), lesquels permettent le glissement en direction vertical et la fixation de ladite platine au dessus de la base supérieure (2a) du corps (2) et au niveau desdits guides (8) pour pouvoir appuyer sur celle-ci et aligner les couches (3, 4 et 5) situées sur ceux-ci et qui vont être stratifiées.
